# EUROPEAN PATENT SPECIFICATION

(11) **EP 2 025 563 B1**
(45) Date of publication and mention of the grant of the patent: **30.12.2009**
(21) Application number: 07381056.6
(22) Date of filing: 07.08.2007
(51) Int. Cl.: B60R 21/20

(54) **Airbag module for automotive vehicles with a foldable container**
Airbagmodul mit faltbarem Behälter für Kraftfahrzeuge
Module de coussin d'air pour véhicules automobiles doté d'un récipient pliable

(43) Date of publication of application: 18.02.2009
(73) Proprietor: Dalphi Metal España, S.A., 28006 Madrid (ES)
(72) Inventor: Duarte de Arez, Luis José, 47151 Valladolid (ES); Rueda, Roberto, 47151 Boecillo, Valladolid (ES)
(74) Representative: Mehnert, Bernhard

(56) References cited:
- EP-A- 0 818 363
- EP-A- 0 823 354
- EP-A- 1 738 970
- DE-A1- 10 154 964
- DE-U1- 20 207 860
- DE-U1- 29 807 098
- GB-A- 2 391 520
- US-A- 5 810 390
- US-A1- 2007 164 541
- US-B1- 6 422 589
- US-B1- 6 422 590

## Description

### FIELD OF THE INVENTION

The present invention relates to an airbag module for automotive vehicles, and more particularly to an airbag module with a one-piece foldable container.

### BACKGROUND OF THE INVENTION

Once-piece airbag module casings made by means of injecting a plastic material in a mold with the desired shape are known in the prior art.

Patents US 6,422,589 and the generic US 6,422,590 describe casings of this type, the first of such casings being made with a recyclable plastic material, which aids in the fact that the airbag module can be recycled without needing to be disassembled.

Otherwise, some airbag modules normally use additional covers in the casing both for aiding in handling them from the time they are manufactured until they are installed in the automotive vehicle as well as for correctly placing them therein.

In this sense, patent EP 0 823 354 describes a cover made with two parts, patent GB 2391520 describes a cover joined to a casing by means of an adhesive and patent EP 1 738 970 describes a cover with two types of materials.

A drawback of the casings and covers of the prior art is that they are complex and expensive components which involve complicated manufacturing processes.

The present invention is aimed at solving this drawback.

### SUMMARY OF THE INVENTION

An objective of the present invention is to provide an airbag module container carrying out the functions of casings and covers of the prior art.

Another objective of the present invention is to provide a one-piece airbag module container.

Another objective of the present invention is to provide an easy-to-manufacture airbag module container.

Another objective of the present invention is to provide an airbag module container aiding in packing the airbag module components.

These and other objectives are achieved by means of an airbag module for automotive vehicles comprising a gas generator and an inflatable cushion which are housed in a prismatic container formed by folding a flat sheet of plastic material having polygonal-shaped surfaces defined therein by means of pre-cut lines, which surfaces correspond to the large sides of the container, and a typically rectangular surface between them, corresponding to the back side of the container, close to which the generator is located, as well as flaps with a rectangular surface contiguous to one of said large sides, corresponding to the remaining sides of the container, said flaps and the large side they are separated from including cooperating means, defined by means of pre-cut lines which allow closing the container and, optionally, means also defined by means of pre-cut lines intended for aiding in positioning and fixing the airbag module in the vehicle.

In a preferred embodiment, the joining areas where the closure means are joined to said large side are weakened to aid both in folding them in order to close the container and in breaking them during cushion deployment.

In another preferred embodiment, said closure means of the container are configured such that the closure is reversible so that the container can open during cushion deployment.

An advantage of the present invention is how easy it is to make the container and its low costs because it requires no complex tools and, particularly, none of the commonly used injection molds.

Another advantage of the present invention is that it aids in making container prototypes, which contributes to optimizing the container that is suited for each type of airbag module.

Another advantage of the present invention is that it positively contributes to the correct cushion deployment.

Another advantage of the present invention is that it positively contributes to maintaining the integrity of the cushion during the entire airbag module manufacturing and installation process.

Other features and advantages of the present invention will be inferred from the following detailed description of an illustrative and by no means non-limiting embodiment of its object in relation to the attached drawings.

### DESCRIPTION OF THE DRAWINGS

Figures 1a and 1b are schematic cross-section views of a side airbag module according to the present invention, before and after cushion deployment.
Figure 2 shows a plan view of the flat sheet used to form the container of the airbag module according to the present invention, with pre-cut lines defining the different parts of the container.
Figures 3a, 3b and 3c show perspective views of three states of the process of packing an airbag module using a container according to present invention.
Figure 4 shows a schematic view similar to Figure 1a, showing the closure means of the cushion.
Figures 5a and 5b show schematic views of two embodiments of the closure means of a container of an airbag module according to the present invention.

### DETAILED DESCRIPTION OF THE INVENTION

The basic components of the side airbag module according to an embodiment of the invention that will be described below are the container 11, the cushion 13 and the generator 15.

The prismatic container 11 acts as a housing for the cushion 13 and the generator 15 and has a one-piece configuration. The cushion 13, with the generator 15 coupled thereto, is folded inside the container 11.

The side airbag module is located in the automotive vehicle such that it can be deployed between the vehicle body 17 and the occupant (not shown) and for that purpose the container is fixed to the vehicle by means of suitable means 19.

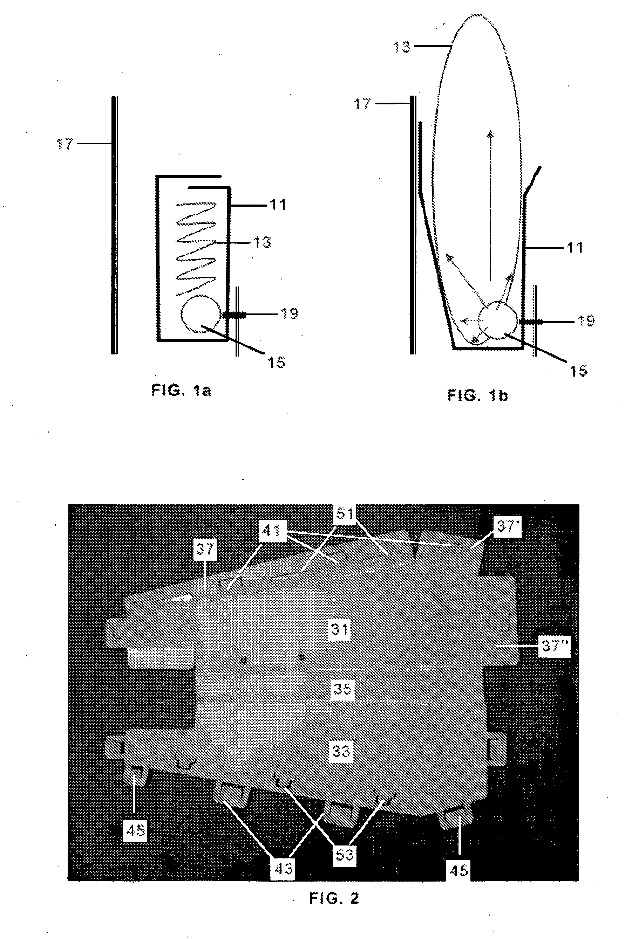

The container 11 is formed by means of folding operations starting from a flat laminar part where its sides are defined with pre-cut lines. According to Figure 2, it can be seen that the polygonal-shaped large sides 31, 33, the rectangular back side 35 and three flaps 37, 37', 37" corresponding to the sides forming the closing surface of the container are defined.

For the purpose of the present invention, the term "pre-cut lines" must be broadly understood, comprising any type of folding line and particularly lines made by means of cutting the laminar material without passing through its thickness, carried out by any means, such as laser cutting or water jet.

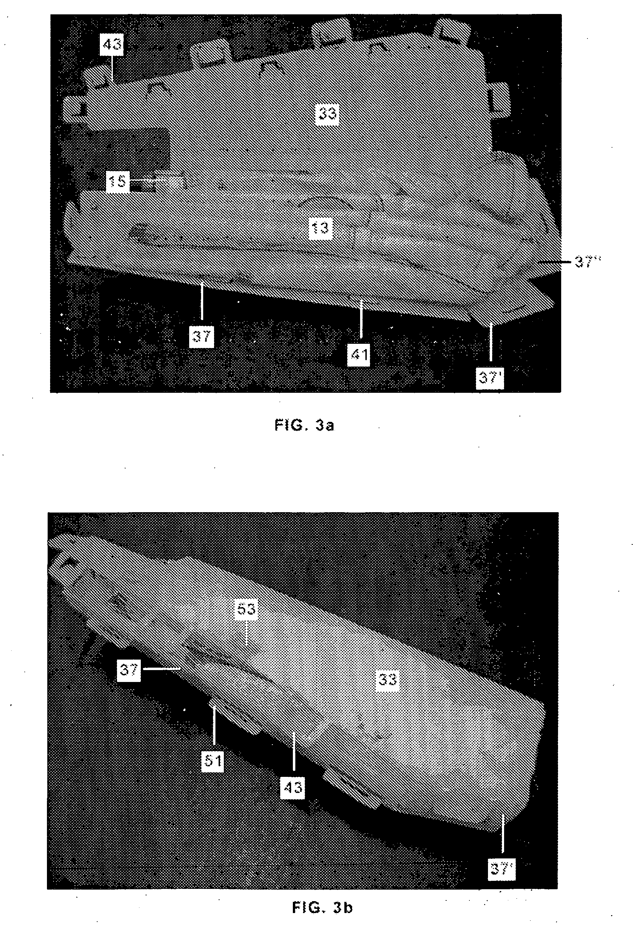

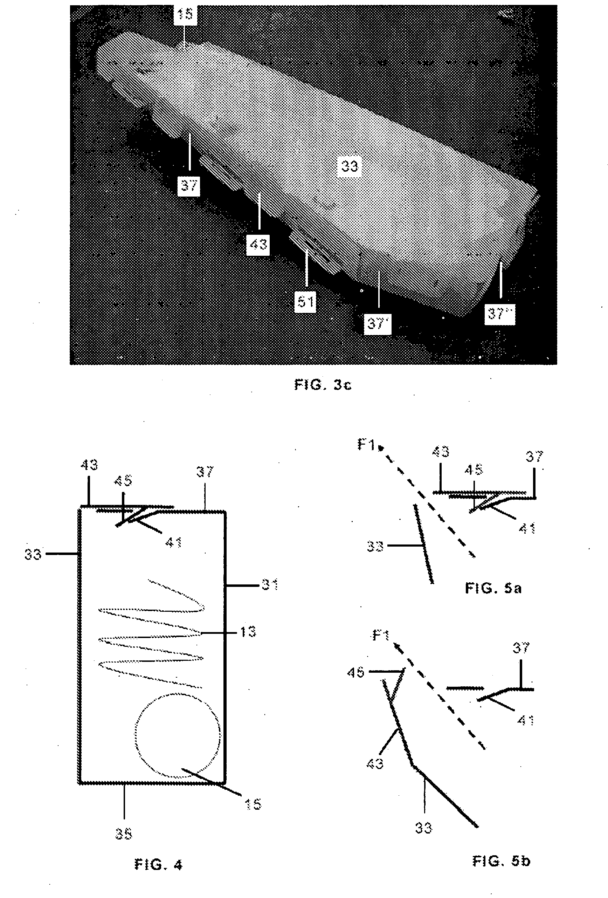

The flaps 37, 37', 37'' and the side 33 include, respectively, U-shaped openings 41 and projecting elements 43 with tabs 45 which, as can be seen particularly in Figures 3b and 3c, form closure means of the container 11 when the tabs 45 are retained in the openings 41.

The closure means 41, 43, 45 can be configured such that during cushion deployment in the direction indicated by arrow F1 they can open or not, as shown in Figures 5a and 5b.

Figure 5a shows a configuration corresponding to the embodiment of the container show in Figures 2 and 3, wherein the closure means are not, so to speak, reversible, but rather the projecting elements 43 break at the joining lines where they are joined to the side 33 (suitably weakened for that purpose), such that the breaking line of the container coincides with the outer edge of the large side 33.

Figure 5b shows a configuration wherein the closure means are reversible such that during cushion deployment the tab 45 separates, without breaking, from the opening 41 of the flap 37.

In the embodiment being described the flaps 37, 37' and 37" and side 33 in turn include, respectively, ears 51 and tongues 53 to aid in positioning and fixing the airbag module in the vehicle, each of them cooperating with supplementary clamping means in the vehicle seat.

In other embodiments of the invention, the container 11 does not include specific means for positioning and fixing the airbag module in the vehicle made by means of pre-cut lines in the flat starting sheet.

As a person skilled in the art will understand, the geometry of the laminar part from which the container 11 will be formed will be according to the functional requirements and volume established by the manufacturer of the vehicle that the airbag module will be installed in.

Said laminar part is preferably manufactured from a board of polymeric material, such as polypropylene, polyethylene, polystyrene, polyamide or polycarbonate, the chemical and mechanical characteristics of which are suitable for meeting the requirements established to that effect, including environmental requirements.

The container 11 according to the invention positively contributes to obtaining good cushion 13 deployment and positioning in relation to the vehicle occupant.

As shown in Figures 1a and 1b, the one-piece structure of the container 11 with a well defined opening/closure surface 37 allows the container 11 itself to act, once open, as a deflector, correctly guiding cushion 13 deployment.

When the generator 15 releases the gas, the cushion 13 begins to fill up, pushing the contact surfaces of the container 11 against the corresponding surrounding area 17 of the vehicle. This contact pressure, together with the geometric features of the airbag module, and other factors such as the folded shape of the cushion 13, prevent the cushion 13 from being able to deploy in an incorrect direction, which risk is experienced by some side airbag modules in which the cushion is deployed in a direction that is opposite to the expected direction, which is a serious malfunction with severe consequences for the occupant's safety.

Another positive effect of the container 11 is that it positively contributes to maintaining the integrity of the cushion 13, since it prevents the cushion 13 during the process of installing the airbag module in the vehicle from coming into contact with components of the vehicle surrounding area that may contain sharp edges or projecting elements that could act as cutting elements.

As previously stated, the embodiments of the invention just described relate to a side airbag module, but as those skilled in the art will understand the invention can be applied to any other type of airbag modules.

While several embodiments of the invention have been described and depicted, it is evident that modifications comprised within the scope thereof can be made, the invention not being limited to said embodiments but to the content of the following claims.

## Claims

1. An airbag module for automotive vehicles, comprising a gas generator (15) and an inflatable cushion (13) which are housed in a container (11), **characterized in that:**
a) said container (11) is prismatic in shape and is formed by folding a flat sheet of suitable material in which its large sides (31, 33), its back side (35) and, as extensions of the sides of one of said large sides (31), flaps (37, 37', 37'') corresponding to the sides of the closing surface of the container (11), are defined by means of pre-cut lines;
b) said flaps (37, 37', 37'') and the large side (33) they are separated from include, respectively, cooperating means (41, 43, 45) defined by means of pre-cut lines, which allow closing the container (11).

2. An airbag module for automotive vehicles according to claim 1, **characterized in that** said cooperating means (41, 43, 45) consist of U-shaped openings (41) in said flaps (37, 37', 37") and elements (43) projecting from said large side (33) including tabs (45), configured such that said tabs (45) can be retained in said openings (41).

3. An airbag module for automotive vehicles according to claim 2, **characterized in that** said projecting elements (43) are joined to the large side (33) through weakened areas both to aid in folding them and in breaking them during cushion (13) deployment.

4. An airbag module for automotive vehicles according to claim 1, **characterized in that** said cooperating closing means of the container are configured in a reversible manner such that they can open during cushion (13) deployment.

5. An airbag module for automotive vehicles according to any of claims 1-4, **characterized in that** the container (11) also includes means (51, 53) defined by means of pre-cut lines in said flat sheet intended to aid in positioning and fixing the airbag module in the vehicle.

6. An airbag module for automotive vehicles according to claim 5, **characterized in that** said means (51, 53) intended to aid in positioning and fixing the airbag module in the vehicle are located in said flaps (37, 37', 37'') and/or in said large side (33).

7. An airbag module for automotive vehicles according to claim 6, **characterized in that** said means (51, 53) intended to aid in positioning and fixing the airbag module in the vehicle consist of ears (51) located in said flaps (37, 37', 37'') and/or of tongues (53) located in said large side (33).

8. An airbag module for automotive vehicles according to any of claims 1-7, **characterized in that** said flat sheet is made of a material chosen from the following: polypropylene, polystyrene, polyamide, polycarbonate.

## Patentansprüche

1. Airbagmodul für Fahrzeuge mit einem Gasgenerator (15) und einem aufblasbaren Kissen (13), welche in einem Behälter (11) angeordnet sind, **dadurch gekennzeichnet, dass:**
a) der Behälter (11) von prismatischer Form ist und durch Faltern eines flachen Blattes von geeignetem Material gebildet ist, dessen große Seiten (31, 33), dessen Rückseite (35) und, als Verlängerungen der Seiten einer der großen Seiten (31), Klappen (37, 37', 37") entsprechend den Seiten der Schließfläche des Behälters (11) durch vorgestanzte Linien definiert sind;
b) die Klappen (37, 37', 37") und die große Seite (33), von der sie getrennt sind, jeweils durch vorgestanzte Linien definierte Mitwirkeinrichtungen (41, 43, 45) aufweisen, die ein Verschließen des Behälters (11) gestatten.

2. Airbagmodul für Fahrzeuge nach Anspruch 1, **dadurch gekennzeichnet, dass** die Mitwirkeinrichtungen (41, 43, 45) aus U-förmigen Öffnungen (41) in den Klappen (37, 37', 37") und aus Elementen (43) bestehen, die mitsamt Lappen (45) von der großen Seite (33) vorstehen, derart, dass die Lappen (45) in den Öffnungen (41) festgehalten werden.

3. Airbagmodul für Fahrzeuge nach Anspruch 2, **dadurch gekennzeichnet, dass** die vorstehenden Elemente (43) mit der der großen Seite (33) durch geschwächte Bereiche verbunden sind, sowohl als Falt-Hilfe, als auch zum Zerbrechen bei einer Entfaltung des Kissens.

4. Airbagmodul für Fahrzeuge nach Anspruch 1, **dadurch gekennzeichnet, dass** die Mitwirkeinrichtungen (41, 43, 45) zum Verschluss des Behälters (11) in reversibler Art so ausgebildet sind, dass sie sich bei einer Entfaltung des Kissens öffnen können.

5. Airbagmodul für Fahrzeuge nach einem der Ansprüche 1 bis 4, **dadurch gekennzeichnet, dass** der Behälter (11) auch in das flache Blatt vorgestanzte Linien definierte Mittel (51, 53) aufweist, die als Hilfe zur Positionierung und Befestigung des Airbagmoduls im Fahrzeug vorgesehen sind.

6. Airbagmodul für Fahrzeuge nach Anspruch 5, **dadurch gekennzeichnet, dass** die als Hilfe zur Positionierung und Befestigung des Airbagmoduls im Fahrzeug vorgesehenen Mittel (51, 53) in den Klappen (37, 37', 37") und/ oder in der großen Seite (33) vorgesehen sind.

7. Airbagmodul für Fahrzeuge nach Anspruch 6, **dadurch gekennzeichnet, dass** die als Hilfe zur Positionierung und Befestigung des Airbagmoduls im Fahrzeug vorgesehenen Mittel (51, 53) aus in den Klappen (37, 37', 37") angeordneten Ohren (51) und/ oder in der großen Seite (33) angeordneten Zungen (53) bestehen.

8. Airbagmodul für Fahrzeuge nach einem der Ansprüche 1 bis 7, **dadurch gekennzeichnet, dass** das flache Blatt aus einem Material aus der Gruppe Polypropylen, Polystyren, Polyamid und Polycarbonat gefertigt ist.

## Revendications

1. Module de coussin de sécurité gonflable pour véhicules automobiles, comprenant un générateur de gaz (15) et un coussin gonflable (13) qui sont logés dans un boîtier (11), **caractérisé en ce que:**
a) ledit boîtier (11) a la forme d'un prisme et est façonné en repliant une feuille plate d'un matériau approprié dans laquelle ses grands côtés (31, 33), son côté arrière (35), et, des rabats (37, 37', 37''), faisant office d'extensions des côtés de l'un desdits grands côtés (31), correspondant aux côtés de la surface de fermeture du boîtier (11), sont définis au moyen de lignes prédécoupées;
b) lesdits rabats (37, 37', 37'') et le grand côté (33) duquel ils sont séparés incluent, respectivement, des moyens de coopération (41, 43, 45) définis au moyen de lignes prédécoupées, qui permettent la fermeture du boîtier (11).

2. Module de coussin de sécurité gonflable pour véhicules automobiles selon la revendication 1, **caractérisé en ce que** lesdits moyens de coopération (41, 43, 45) consistent en des ouvertures (41) en forme de U dans lesdits rabats (37, 37', 37'') et des éléments (43) qui se projettent dudit grand côté (33) comportant des pattes (45), configurés de sorte que lesdites pattes (45) puissent être retenues dans lesdites ouvertures (41).

3. Module de coussin de sécurité gonflable pour véhicules automobiles selon la revendication 2, **caractérisé en ce que** lesdits éléments (43) en projection sont reliés au grand côté (33) par l'intermédiaire de zones affaiblies à la fois pour faciliter leur pliage et leur rupture pendant le déploiement du coussin (13).

4. Module de coussin de sécurité gonflable pour véhicules automobiles selon la revendication 1, **caractérisé en ce que** lesdits moyens de coopération pour la fermeture du boîtier sont configurés de manière réversible pour qu'ils puissent s'ouvrir pendant le déploiement du coussin (13).

5. Module de coussin de sécurité gonflable pour véhicules automobiles selon l'une quelconque des revendications 1-4, **caractérisé en ce que** le boîtier (11) inclut en plus des moyens (51-53) définis par l'intermédiaire de lignes prédécoupées dans ladite feuille plate destinés à aider au positionnement et à la fixation du module de coussin de sécurité gonflable dans le véhicule.

6. Module de coussin de sécurité gonflable pour véhicules automobiles selon la revendication 5, **caractérisé en ce que** lesdits moyens (51-53) destinés à aider au positionnement et à la fixation du module de coussin de sécurité gonflable dans le véhicule sont situés dans lesdits rabats (37, 37', 37'') et/ou dans ledit grand côté (33).

7. Module de coussin de sécurité gonflable pour véhicules automobiles selon la revendication 6, **caractérisé en ce que** lesdits moyens (51-53) destinés à au positionnement et à la fixation du module de coussin de sécurité gonflable dans le véhicule se composent d'oreillettes (51) situées dans lesdits rabats (37, 37', 37'') et/ou des languettes (53) situées dans ledit grand côté (33).

8. Module de coussin de sécurité gonflable pour véhicules automobiles selon l'une quelconque des revendications 1-7, **caractérisé en ce que** ladite feuille plate est réalisée en un matériau sélectionné du groupe qui suit: polypropylène, polystyrène, polyamide, polycarbonate.
